# EUROPEAN PATENT SPECIFICATION

(11) **EP 2 927 468 B1**
(45) Date of publication and mention of the grant of the patent: **13.12.2017**
(21) Application number: 15155310.4
(22) Date of filing: 17.02.2015
(51) Int. Cl.: F02D 41/40, F02D 41/00

(54) **Engine**
Motor
Moteur

(30) Priority: 31.03.2014 JP 2014071076
(43) Date of publication of application: 07.10.2015
(73) Proprietor: Kubota Corporation, Osaka-shi, Osaka (JP)
(72) Inventor: Yoshita, Yuki, Sakai-shi, Osaka (JP); Ueda, Masato, Sakai-shi, Osaka (JP); Miyauchi, Wataru, Sakai-shi, Osaka (JP); Hanada, Takashi, Sakai-shi, Osaka (JP); Tochimoto, Masayuki, Sakai-shi, Osaka (JP)
(74) Representative: Dolleymores

(56) References cited:
- EP-A2- 0 921 285
- EP-A2- 0 953 756
- JP-A- 2010 014 013
- US-A1- 2012 000 197
- US-A1- 2012 004 826
- US-A1- 2012 330 537

## Description

### BACKGROUND OF THE INVENTION

### (1) Field of the Invention

The present invention relates to an engine and particularly to an engine having a fuel injection device with an extended useful life.

### (2) Description of Related Art

There is a conventional engine which includes a controller and a fuel injection device and in which the fuel injection device carries out a pre-injection and a main injection during a single combustion cycle by a control by the controller (see Fig. 3 in Japanese Patent Application Laid-open No. 2002-213287, for example).

This type of engine has an advantage that PM and NOx can be reduced by increase in an air utilization rate and slow combustion.

This type of device may carry out a pre-injection and a main injection in every operation area in some cases.

### «Problem»

The useful life of the fuel injection device is shortened.

If this type of device carries out the pre-injection and the main injection in every operation area, it results in too many fuel injections, which shortens the useful life of the fuel injection device.

Further prior art arrangements are known from JP2010 014013, US 2012/000197, US 2012/004826, EP 0953756 and EP 0921285.

### SUMMARY OF THE INVENTION

An object of the present invention is to provide an engine having a fuel injection device with an extended useful life.

According to the present invention in a first aspect, there is provided an engine as recited by Claim 1.

### (Invention According to Claim 1)

The invention according to claim 1 exerts the following effects.

### <<Effect>>

It is possible to extend a useful life of the fuel injection device.

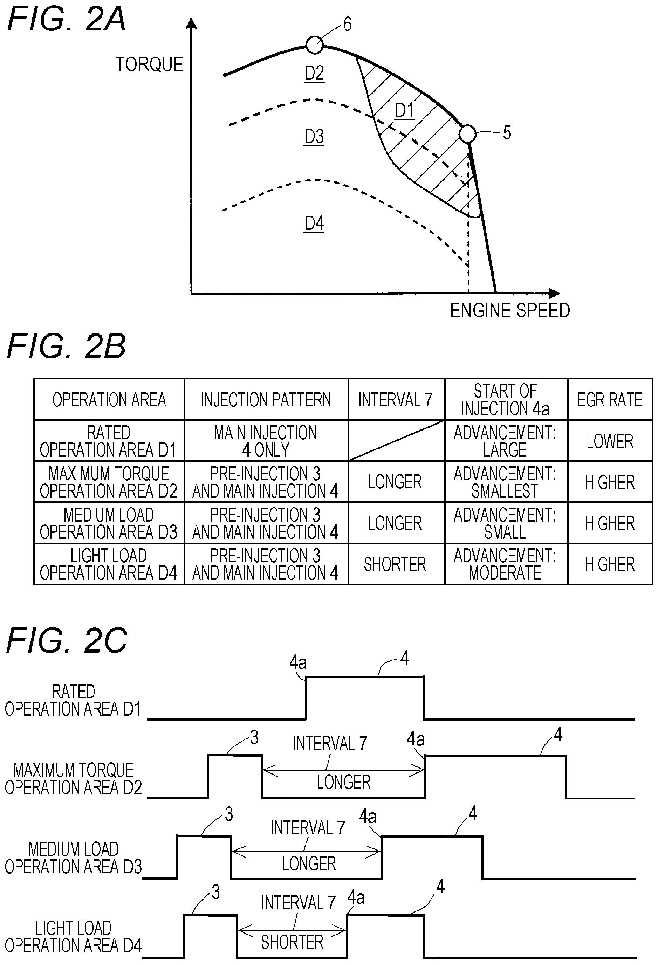

As illustrated as the example in Figs. 2B and 2C, the main injection (4) is carried out without the pre-injection (3) in the rated operation area (D1) and the pre-injection (3) and the main injection (4) are carried out in each of the other operation areas (D2), (D3), and (D4) by the control by the controller (1). Therefore, as compared with a case in which the pre-injection (3) and the main injection (4) are carried out in each of the all operation areas (D1), (D2), (D3), and (D4), the number of fuel injections (3), (4) can be reduced, which extends the useful life of the fuel injection device (2).

Especially in an industrial engine which is used for a long time in the rated operation area (D1), the effect is outstanding.

### «Effect»

It is possible to reduce PM and NOx.

As illustrated as the example in Figs. 2B and 2C, the main injection (4) is carried out without the pre-injection (3) in the rated operation area (D1) and the pre-injection (3) and the main injection (4) are carried out in each of the other operation areas (D2), (D3), and (D4) by the control by the controller (1). Therefore, in the other operation areas (D2), (D3), and (D4), PM can be reduced by increase in an air utilization rate and NOx can be reduced by slow combustion.

Also, as illustrated as the example in Figs. 2B and 2C, injection start timing (4a) of the main injection (4) is further advanced in the rated operation area (D1) than in the other operation areas (D2), (D3), and (D4) by the control by the controller (1). Therefore, ignition delay is suppressed, afterburning is suppressed, and PM can be reduced. At the same time, the combustion pressure increases slowly and NOx can be reduced.

### (Invention According to Claim 2)

The invention according to claim 2 exerts the following effect in addition to the effects of the invention according to claim 1.

### <<Effect>>

It is possible to reduce NOx in the maximum torque operation area and the medium load operation area.

As illustrated as the example in Figs. 2B and 2C, an interval (7) between an end of the pre-injection (3) and a start of the main injection (4) is set to a longer period in each of the maximum torque operation area (D2) and the medium load operation area (D3) than in the light load operation area (D4) by the control by the controller (1). Therefore, combustion pressure increases slowly and NOx can be reduced.

### (Invention According to Claim 3)

The invention according to claim 3 exerts the following effects in addition to the effects of the invention according to any one of claims 1 to 3.

### <<Effect>>

An engine output is increased in the rated operation area.

As illustrated as the example in Fig. 2B, an EGR rate is set to a lower value in the rated operation area (D1) than in the other operation areas (D2), (D3), and (D4) by the control by the controller (1), which increases the engine output.

### <<Effect>>

It is possible to reduce PM in the rated operation area.

As illustrated as the example in Fig. 2B, the EGR rate is set to the lower value in the rated operation area (D1) than in the other operation areas (D2), (D3), and (D4) by the control by the controller (1). Therefore, an excess air ratio increases and PM can be reduced.

### BRIEF DESCRIPTION OF THE DRAWINGS

Fig. 1 is a schematic diagram of a diesel engine according to an embodiment of the present invention; and
Figs. 2A to 2C are diagrams for explaining fuel injections in respective operation areas of the engine in Fig. 1, wherein Fig. 2A shows the operation areas, Fig. 2B shows a list of fuel injection patterns and the like in the respective operation areas, and Fig. 2C shows timeline charts of the fuel injections in the respective operation areas.

### DETAILED DESCRIPTION OF PREFERRED EMBODIMENT

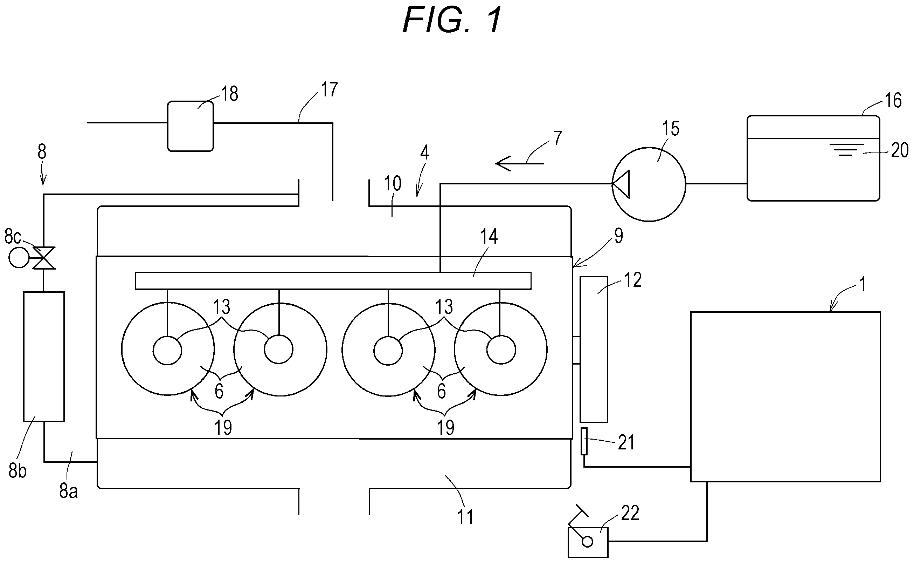

Figs. 1 and 2A to 2C are diagrams for explaining an engine according to an embodiment of the present invention and the vertical inline four-cylinder diesel engine will be described in the embodiment.

As shown in Fig. 1, the engine includes four cylinders (19) and a cylinder head (9), an intake manifold (10) is mounted to one of left and right sides of the cylinder head (9), an exhaust manifold (11) is mounted to the other side. At a rear portion of a cylinder block (not shown) having the cylinders (19), a flywheel (12) is disposed.

A fuel injection device (2) has a following structure.

As shown in Fig. 1, in the cylinder head (9), an injector (13) is disposed for each of the cylinders (19) and each of the injectors (13) is connected to a common rail (14). Into the common rail (14), fuel (20) in a fuel tank (16) is pumped through a fuel supply pump (15). A solenoid valve of each of the injectors (13) is connected to a controller (1), valve opening timing and a valve opening period are controlled by control signals from the controller (1), and a predetermined amount of fuel (20) is injected into each of combustion chambers (6) at a predetermined timing.

As shown in Fig. 1, a rotation speed sensor (21) and a speed regulation sensor (22) are connected to the controller (1) and a set rotation speed of the engine and a deviation of an actual rotation speed from the set rotation speed are used to adjust a fuel injection amount.

The controller (1) is an engine ECU. The engine ECU is an abbreviation of the engine electronic control unit and is a microcomputer.

An intake flow rate sensor (18) is disposed on an intake path (17) for supplying intake air into the intake manifold (10).

The controller (1) and the fuel injection device (2) are provided as shown in Fig. 1 and the fuel injection device (2) carries out fuel injections (3) and (4) by the control by the controller (1) as shown in Figs. 2B and 2C.

As shown in Fig. 2A, in a coordinate system formed by a horizontal axis representing the engine rotation speed and a vertical axis representing torque, an operation area is divided into a rated operation area (D1) including a rated point (5) where the maximum output can be obtained, a maximum torque operation area (D2) including a maximum torque point (6) where the maximum torque can be obtained, a medium load operation area (D3), and a light load operation area (D4). The rated operation area (D1) is an area close to high speed and high load, the maximum torque operation area (D2) is an area closer to low speed and the high load than the rated operation area (D1), the medium load operation area (D3) is an area closer to the low speed than the rated operation area (D1) and closer to the light load than the maximum torque operation area (D2), and the light load operation area (D4) is an area closer to the light load than the medium load operation area (D3). Division of operation areas and identification of the operation areas during operation are performed by the controller (1).

The fuel injection device (2) is a common rail system as described above.

As shown in Figs. 2B and 2C, the main injection (4) is carried out without the pre-injection (3) in the rated operation area (D1) and the pre-injection (3) and the main injection (4) are carried out in each of the other operation areas (D2), (D3), and (D4) during a single combustion cycle by the control by the controller (1).

The main injection (4) represents a primary fuel injection for obtaining engine output and the pre-injection (3) represents a fuel injection which precedes the main injection (4) and is carried out for improving combustion of the main injection (4).

As shown in Figs. 2B and 2C, by the control by the controller (1), an interval (7) between an end of the pre-injection (3) and a start of the main injection (4) is set to a longer period in each of the maximum torque operation area (D2) and the medium load operation area (D3) than in the light load operation area (D4). Length of the interval (7) is set based on a crank angle difference. The interval (7) is set to a longer period when the crank angle difference is greater while the interval (7) is set to a shorter period when the crank angle difference is smaller.

As shown in Figs. 2B and 2C, by the control by the controller (1), injection start timing (4a) of the main injection (4) is further advanced in the rated operation area (D1) than in the other operation areas (D2), (D3), and (D4). Advancement of the injection start timing (4a) of the main injection (4) is large in the rated operation area (D1), moderate in the light load operation area (D4), small in the medium load operation area (D3), and the smallest in the maximum torque operation area (D2).

An EGR device (8) is provided as shown in Fig. 1 and, by the control by the controller (1) as shown as an example in Fig. 2B, an EGR rate is set to a lower value in the rated operation area (D1) than in the other operation areas (D2), (D3), and (D4).

The EGR device (8) is provided between the exhaust manifold (11) and the intake manifold (10) and includes an EGR cooler (8b) and an EGR valve (8c) at some points on an EGR passage (8a). By the control by the controller (1), an opening degree of the EGR valve (8c) is adjusted and the EGR rate is set.

## Claims

1. An engine comprising a controller (1) and a fuel injection device (2), the fuel injection device (2) carrying out fuel injections (3, 4) by a control by the controller (1),
wherein an operation area is divided into a rated operation area (D1) including a rated point (5) where a maximum output can be obtained, a maximum torque operation area (D2) including a maximum torque point (6) where maximum torque can be obtained, a medium load operation area (D3), and a light load operation area (D4), the rated operation area (D1) is an area close to high speed and high load, the maximum torque operation area (D2) is an area closer to low speed and the high load than the rated operation area (D1), the medium load operation area (D3) is an area closer to the low speed than the rated operation area (D1) and closer to the light load than the maximum torque operation area (D2), the light load operation area (D4) is an area closer to the light load than the medium load operation area (D3), and
the main injection (4) is carried out without the pre-injection (3) in the rated operation area (D1) and the pre-injection (3) and the main injection (4) are carried out in each of the other operation areas (D2, D3, and D4) by the control by the controller (1), **characterised in that**:
injection start timing (4a) of the main injection (4) is further advanced in the medium load operation area (D3) than in the maximum torque operation area (D2), further advanced in the light load operation area (D4) than in the medium load operation area (D3), and further advanced in the rated operation area (D1) than in the light load operation area (D4).

2. The engine according to claim 1,
wherein an interval (7) between an end of the pre-injection (3) and a start of the main injection (4) is set to a longer period in each of the maximum torque operation area (D2) and the medium load operation area (D3) than in the light load operation area (D4) by the control by the controller (1).

3. The engine according to any claims 1 or 2 further comprising an EGR device (8),
wherein an EGR rate is set to a lower value in the rated operation area (D1) than in the other operation areas (D2, D3, and D4) by the control by the controller 1.

## Patentansprüche

1. Motor, der eine Steuereinheit (1) und eine Kraftstoffeinspritzvorrichtung beinhaltet (2), wobei die Kraftstoffeinspritzvorrichtung (2) Kraftstoffeinspritzungen (3, 4) mittels einer Steuerung durch die Steuereinheit (1) ausführt,
wobei ein Betriebsbereich in einen Nennbetriebsbereich (D1), einschließlich einem Nennpunkt (5), bei dem eine maximale Ausgabe erhalten werden kann, einen maximalen Drehmomentbetriebsbereich (D2), einschließlich einem maximalen Drehmomentpunkt (6), bei dem ein maximales Drehmoment erhalten werden kann, einen mittleren Lastbetriebsbereich (D3) und einen leichten Lastbetriebsbereich (D4) unterteilt ist, wobei der Nennbetriebsbereich (D1) ein Bereich nahe einer hohen Geschwindigkeit und hohen Last ist, der maximale Drehmomentbetriebsbereich (D2) ein Bereich näher einer niedrigen Geschwindigkeit und der hohen Last als der Nennbetriebsbereich (D1) ist, der mittlere Lastbetriebsbereich (D3) ein Bereich näher der niedrigen Geschwindigkeit als der Nennbetriebsbereich (D1) und näher der leichten Last als der maximale Drehmomentbetriebsbereich (D2) ist, der leichte Lastbetriebsbereich (D4) ein Bereich näher der leichten Last als der mittlere Lastbetriebsbereich (D3) ist, und
die Haupteinspritzung (4) ohne Voreinspritzung (3) im Nennbetriebsbereich (D1) ausgeführt wird und die Voreinspritzung (3) und die Haupteinspritzung (4) in jedem der anderen Betriebsbereiche (D2, D3 und D4) mittels der Steuerung durch die Steuereinheit (1) ausgeführt werden,
**dadurch gekennzeichnet, dass**:
der Einspritzungsstartzeitpunkt (4a) der Haupteinspritzung (4) weiter vorgelegt ist im mittleren Lastbetriebsbereich (D3) als im maximalen Drehmomentbetriebsbereich (D2),
weiter vorgelegt ist im leichten Lastbetriebsbereich (D4) als im mittleren Lastbetriebsbereich (D3) und weiter vorgelegt ist im Nennbetriebsbereich (D1) als im leichten Lastbetriebsbereich (D4).

2. Motor gemäß Anspruch 1,
wobei ein Intervall (7) zwischen einem Ende der Voreinspritzung (3) und einem Start der Haupteinspritzung (4) mittels der Steuerung durch die Steuereinheit (1) in jedem des maximalen Drehmomentbetriebsbereichs (D2) und des mittleren Lastbetriebsbereichs (D3) auf eine längere Periode eingestellt ist als im leichten Lastbetriebsbereichs (D4).

3. Motor gemäß einem der Ansprüche 1 oder 2, der eine EGR-Vorrichtung (8) beinhaltet, wobei mittels der Steuerung durch die Steuereinheit (1) eine EGR-Rate im Nennbetriebsbereich (D1) auf einen niedrigeren Wert eingestellt ist als in den anderen Betriebsbereichen (D2, D3 und D4).

## Revendications

1. Un moteur composé d'un régulateur (1) et d'un dispositif d'injection de carburant (2), ce dispositif d'injection de carburant (2) effectuant l'injection de carburant (3, 4) grâce au contrôle assuré par le régulateur (1),
avec une zone de fonctionnement qui est divisée de la manière suivante : une zone de fonctionnement nominal (D1) comportant un point nominal (5) qui permet d'obtenir la puissance de sortie maximale, une zone de fonctionnement au couple maximal (D2) comportant un point à couple maximal (6) qui permet d'obtenir le couple maximal, une zone de fonctionnement en présence d'une charge moyenne (D3) et une zone de fonctionnement en présence d'une faible charge (D4) ; la zone de fonctionnement nominal (D1) est une zone proche du régime élevé et des charges élevées ; la zone de fonctionnement au couple maximal (D2) est une zone plus proche du faible régime et des charges élevées que la zone de fonctionnement nominal (D1) ; la zone de fonctionnement en présence d'une charge moyenne (D3) est une zone plus proche du faible régime que la zone de fonctionnement nominal (D1) et plus proche de la faible charge que la zone de fonctionnement au couple maximal (D2) ; la zone de fonctionnement en présence d'une faible charge (D4) est une zone plus proche de la faible charge que la zone de fonctionnement en présence d'une charge moyenne (D3) et
l'injection principale (4) s'effectue sans la pré-injection (3) dans la zone de fonctionnement nominal (D1) et la pré-injection (3) et l'injection principale (4) s'effectuent dans chacune des autres zones de fonctionnement (D2, D3 et D4) grâce au contrôle assuré par le régulateur (1), en fonction des caractéristiques suivantes :
le calage au démarrage de l'injection (4a), en ce qui concerne l'injection principale (4), bénéficie d'une avance supplémentaire dans la zone de fonctionnement en présence d'une charge moyenne (D3) par rapport à la zone de fonctionnement au couple maximal (D2), d'une avance supplémentaire dans la zone de fonctionnement en présence d'une faible charge (D4) par rapport à la zone de fonctionnement en présence d'une charge moyenne (D3) et d'une avance supplémentaire dans la zone de fonctionnement nominal (D1) par rapport à la zone de fonctionnement en présence d'une faible charge (D4).

2. Le moteur décrit dans la réclamation 1, si ce n'est qu'un intervalle (7) entre la fin de la pré-injection (3) et le début de l'injection principale (4) est programmé sur une durée plus longue dans chaque zone de fonctionnement au couple maximal (D2) et dans la zone de fonctionnement en présence d'une charge moyenne (D3) ainsi que dans la zone de fonctionnement en présence d'une faible charge (D4) grâce au contrôle assuré par le régulateur (1).

3. Le moteur décrit dans la réclamation 1 ou 2, si ce n'est qu'il y a en outre un dispositif EGR de recyclage des gaz d'échappement (8) et si ce n'est qu'un taux EGR de recyclage des gaz d'échappement est programmé sur une valeur plus faible dans la zone de fonctionnement nominal (D1) que dans les autres zones de fonctionnement (D2, D3 et D4) grâce au contrôle assuré par le régulateur (1).
